# EUROPEAN PATENT APPLICATION

(11) **EP 2 682 636 A1**
(43) Date of publication of application: **08.01.2014**
(21) Application number: 12175343.8
(22) Date of filing: 06.07.2012
(51) Int. Cl.: F16F 1/32, F16C 25/08, F16C 19/16

(54) **Fixing of ondular washer in angular contact bearing assembly for use in a steering column**

(71) Applicant: Aktiebolaget SKF, 41 550 Göteborg (SE)
(72) Inventor: Bussit, Sylvain, 37380 Monnaie (FR); Jansen, Daniel, 37000 Tours (FR); Lepine, Thomas, 37510 Villandry (FR); Montboeuf, Bruno, 37390 CERELLES (FR)
(74) Representative: Burö, Sven Peter

(57) **Abstract**

The invention relates to an angular contact bearing assembly for use in a steering column, comprising at least one rolling bearing, a sleeve (14) for mounting an inner ring (12) of the at least one rolling bearing on a shaft (10), wherein the sleeve (14) is provided with a fixing structure (20), and an ondular washer (22) exerting an axial preload on an axial end face (32) of the sleeve (14), wherein the ondular washer (22) is provided with one or more axial protrusions (24) engaging the fixing structure (20) of the sleeve (14).

In order to facilitate the assembly procedure, is proposed that the fixing structure (20) of the sleeve (14) is a collar with rotational symmetry in relation to an axis (A) of the shaft (10) and/or that the at least one axial protrusion (24) of the ondular washer (22) has an end part (26) which is bent radially outward.

## Description

The invention relates to an angular contact bearing assembly in a steering column.

Steering columns in automobiles are generally equipped with angular contact ball bearing assemblies comprising an inner ring with a concave recess forming a first raceway, an outer ring with a concave recess forming a second raceway and a set of balls contacting both the first raceway and the second raceway. In order to simplify the mounting of the inner ring on a central shaft of the steering column, the inner ring is mounted on the shaft via a sleeve or tolerance ring, which is usually moulded of plastics.

An axial preload of the assembly is generated with an ondular washer or wavy spring exerting an axial pre-tension on an axial end face of the sleeve.

The document US 6,375,360 B1 teaches to provide the sleeve with fixing structures in the form of recesses. The ondular washer has tongue-like axial protrusions with arrow-shaped end portions engaging the recesses in the sleeve when fitting the ondular washer onto the sleeve. An edge of the axial end face of the sleeve is provided with chamfered portions in the circumferential part corresponding to the recesses such that the protrusions, which are inclined axially inward in the fitting direction in a force-free state, are deflected radially outward by the chamfer before gliding into the recesses, the bottom face of which is inclined radially inward.

A similar way of fixing the ondular washer to the sleeve is disclosed in DE 10 220 688 B4.

In the geometry of US 6,375,360 B1, the edges of the axial protrusions will come into contact with the chamfer in a fairly steep angle unless the angle of the chamfer to the axial direction is very flat. However, a steep contact angle may lead to blockages, in particular when the ends of the protrusions have not been subjected to chip removal. A flat chamfer angle corresponds to a long axial distance needed for the chamfer, which may not be available and/or results in a large amount of material needed for the sleeve.

Further, the recesses require an orientation of the ondular washer with respect to the sleeve in a circumferential direction. Imprecise orientations may again lead to blockages upon fitting the ondular washer over the sleeve.

In view of the above drawbacks, the invention seeks to avoid inconveniences leading to problems in the assembly process of an angular contact bearing of the above type.

This is achieved by an angular contact bearing assembly according to claim 1.

The invention relates to an angular contact bearing assembly for use in a steering column, comprising at least one rolling bearing, a sleeve for mounting the at least one rolling bearing on a shaft, wherein the sleeve is provided with a fixing structure, and an ondular washer exerting an axial preload or pre-tensioning on an axial end face of the sleeve, wherein the ondular washer is provided with one or more axial protrusions engaging the fixing structure of the sleeve.

According to a first aspect of the invention, it is proposed that the fixing structure of the sleeve is a collar with rotational symmetry in relation to an axis of rotation of the shaft. Due to the rotational symmetry of the fixing structure, the relative orientation of the washer with respect to the sleeve is irrelevant and blockages or hang-ups due to incorrect alignment of the protrusions with pertinent recesses in the sleeve may be avoided.

According to a further aspect of the invention, which can be combined with the first aspect of the invention, the at least one axial protrusion of the ondular washer has an end part which is bent radially outward. This feature avoids steep contact angles between a surface of the sleeve, in particular with a chamfered surface of the sleeve, and blockages or hang-ups resulting from such steep contact-angles. The axial extension of the chamfer may be reduced or the chamfer may be entirely dispensed with.

Both aspects of the invention are alternative solutions to the particular technical problem of avoiding hang-ups during the assembly.

Further, it is proposed that the ondular washer is provided with at least three axial protrusions. This ensures sufficient stability while allowing for a long wavelength pitch in the ondular washer.

In an advantageous embodiment of the invention, the at least one axial protrusion of the ondular washer has an engaging portion inclined radially inward for gripping around a protrusion of the fixing structure.

Further, it is proposed that the angular contact bearing assembly has a sleeve with a shape such that a thickness of a massive shoulder portion of the sleeve between said axial end face and a conoidal abutting surface of the inner ring is larger than the thickness in a portion following the conoidal abutting surface in a load direction of the ondular washer.

Preferably, the fixing structure is provided in the massive shoulder portion of the sleeve.

The bearing may be maintained in a pre-assembled state before being mounted on the shaft when an axial end portion of the sleeve opposite to the axial end face is equipped with snap-fitting protrusions for gripping an axially outer edge of the outer ring.

Further, it is proposed that a latch inclined radially inward in a direction opposite to a fitting direction of the ondular washer is provided in an end part of the at least one axial protrusion of the ondular washer so as to form a snap tab for connecting the ondular washer with the sleeve. This ensures a reliable connection while enabling a simple assembly by fitting the ondular washer over the sleeve.

A further aspect of the invention proposes a steering column for an automotive vehicle comprising a chassis with a mounting support, a shaft and at least one angular contact bearing assembly as discussed above, wherein the angular contact bearing assembly is mounted on the chassis mounting support and supports the shaft.

The above embodiments of the invention as well as the appended claims and figures show multiple characterizing features of the invention in specific and non-limiting combinations. The skilled person will easily be able to consider further combinations or sub-combinations of these features in order to adapt the invention as defined in the claims to his or her specific needs.
Fig. 1 is a schematic view of a steering column with an angular contact bearing assembly according to the invention;
Fig. 2 is a sectional view of an ondular washer of the angular contact bearing assembly according to the invention;
Fig. 3 is a detail of the sectional view of Fig. 2 showing a fixing protrusion of an ondular washer according to the invention;
Fig. 4 is a side view of the ondular washer according to Figs. 2 and 3;
Fig. 5 is a first perspective view of a first embodiment of a sleeve of the angular contact bearing assembly according to the invention;
Fig. 6 is a second perspective view the sleeve of the angular contact bearing assembly according to Fig. 5;
Fig. 7 is a perspective view of a second embodiment of a sleeve of the angular contact bearing assembly according to the invention; and
Fig. 8 is a fixing protrusion of an ondular washer according to a second embodiment of ondular washer of the invention.

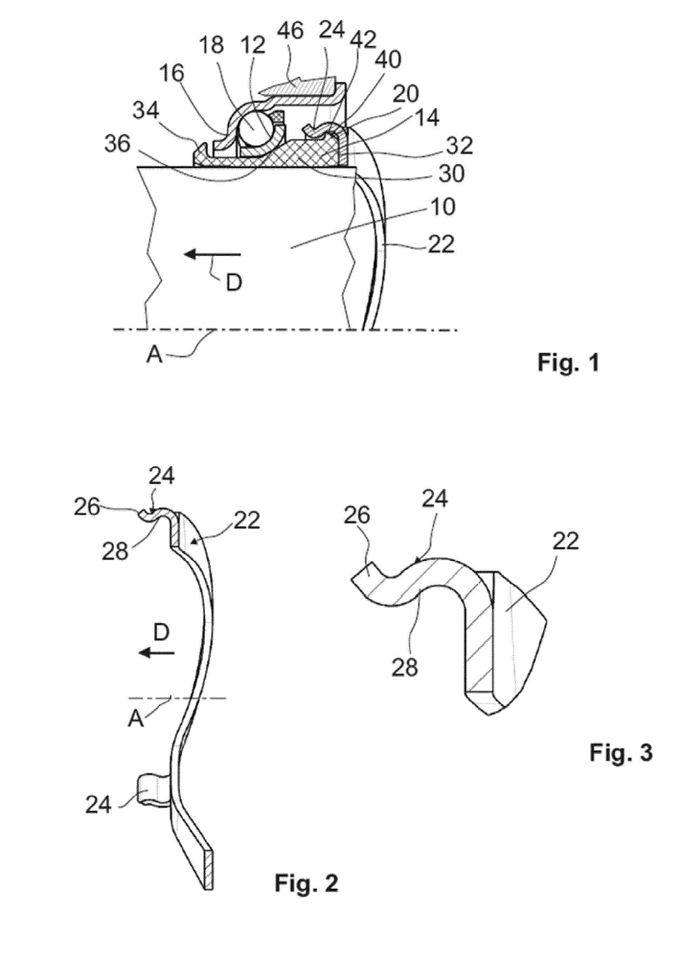

Fig. 1 is a schematic sectional view of an angular contact bearing assembly in a steering column of an automobile. The bearing assembly is mounted on a central shaft 10 connecting a steering wheel with steering rods (not shown).

The angular contact bearing assembly comprises a rolling bearing. In particular, the rolling bearing comprises an inner ring 12 with a concave recess forming a first raceway. The inner ring 12 is formed as a stamped and hardened sheet-metal piece in the illustrated embodiment, but could be made massive in the alternative.

The inner ring 12 is mounted on the shaft 10 via a plastic sleeve 14 contacting a conical inner surface of the inner ring 12 and having a certain elasticity such that the inner surface of the sleeve 14 is deformed radially inward when the inner ring 12 is pressed on the sleeve 14 such that a force-fitting connection between the inner ring 12 and the sleeve 14 is established.

Further, the angular contact bearing assembly comprises an outer ring 16 with a concave recess forming a second raceway. The outer ring 16 is formed as a stamped a hardened sheet-metal piece in the illustrated embodiment, but could be made massive in the alternative.

The outer ring 16 is mounted in a chassis mounting support 46 of a steering column of an automotive vehicle.

A set of balls 18 contacting both the first raceway and the second raceway is guided in a cage (not shown).

The angular contact ball bearing is preloaded with a corrugated or ondular washer 22 or wavy spring abutting to an axial end face 32 of the sleeve 14 in order to generate an axial pre-tension of the angular contact bearing assembly.

The sleeve 14 is provided with a fixing structure 20 with a notch-like profile in the axial section mating with the axial protrusions 24. The shape of the sleeve 14 in an axial cut is such that a thickness of a massive shoulder portion 30 of the sleeve 14 between said axial end face 32 and a conoidal abutting surface 36 on which the inner ring 12 is supported is larger than the thickness in a portion following the conoidal abutting surface 36 in a load direction D of the ondular washer 22. The fixing structure 20 is provided in the massive shoulder portion 30 of the sleeve 14.

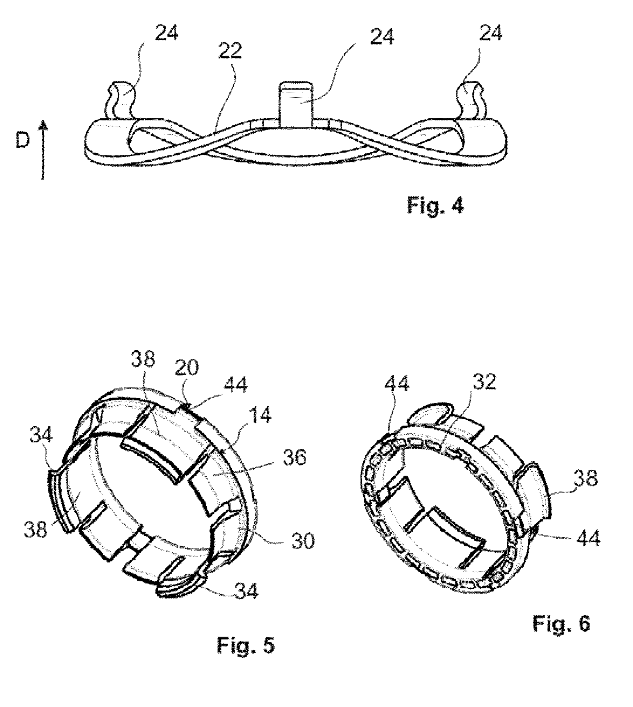

An axial end portion of the sleeve 14 opposite to the axial end face 32 is equipped with snap-fitting protrusions 34 arranged on flexible latches 38 (Figs. 5 - 7) for gripping an axially outer edge of the outer ring 16. The snap-fitting protrusions 34 maintain the bearing in a pre-assembled state before being mounted on the shaft 10. The bearing assembly may be safely delivered to a car-manufacturer in this pre-assembled state.

Figs. 2, 3 and 4 are different views of an ondular washer 22 of the angular contact bearing assembly according to the invention. The ondular washer 22 is provided with three equally spaced axial protrusions 24 engaging the fixing structure 20 of the sleeve 14, arranged in minima of a wavy shape of a main body of the washer 22. The main body of the washer is essentially ring-shaped and has a wavy shape, wherein three periods of the wave are equally distributed over the circumference of the ring. The axial protrusions 24 of the ondular washer 22 have an engaging portion 28 inclined radially inward for gripping around a radial protrusion of the fixing structure 20 respectively.

Fig. 3 is sectional view showing a fixing protrusion of an ondular washer 22 according to the invention in greater detail. The axial protrusions 24 of the ondular washer 22 are provided with an end part 26 which is bent radially outward respectively. This feature avoids steep contact angles between a surface, in particular the chamfer 40, of the sleeve 14 and blockages or hang-ups resulting therefrom.

As shown in Fig. 1, the sleeve 14 is provided with a short and steep chamfer 40 at the radially outer edge of its axial end face 32. When fitting the ondular washer 22 over the sleeve 14, the end parts 26 of the axial protrusions 24 contact the chamfer 40 with a small contact angle and will be deflected radially outward while sliding with the convex portions formed by the bent end portions of the axial protrusions 24 over the chamfer 40. The inclination and shape of the engaging portion 28 such that the engaging portions 28 safely grip the notches 42 on the radially outer surface of the sleeve 14 with a preload.

As illustrated in Fig. 3, the end parts 26 and the engaging portions 28 create an S-shaped profile of the axial protrusions 24 in an axial section.

Figs. 5 - 7 show two possible embodiments of the sleeve 14.

In the first embodiment illustrated in Figures 5 and 6, the sleeve 14 is provided with recesses 44 as the fixing structures 20, wherein the notch 42 in Fig. 1 is formed in the bottom of the recesses 44 respectively. The axial end face 32 is provided with holes for saving weight and material of the sleeve 14. The recesses 44 are arranged in the centre of the latches 38 respectively.

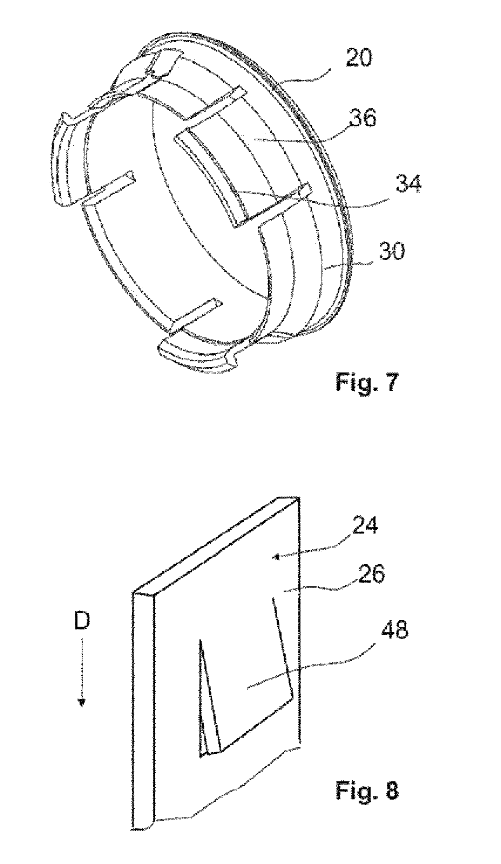

In the embodiment illustrated in Fig. 7, the fixing structure 20 is formed as a collar with rotational symmetry in relation to an axis A of the shaft 10. Due to the rotational symmetry of the fixing structure 20, the relative orientation of the washer with respect to the sleeve 14 is irrelevant and blockages or hang-ups due to incorrect alignment of the protrusions with pertinent recesses in the sleeve 14 may be avoided.

Fig 8 is a fixing protrusion of an ondular washer 22 according to a second embodiment of the ondular washer invention. The following description focuses on differences to the embodiments of Figs. 1 -7, whereas the reader should refer to the foregoing description of Figs. 1 - 3 for features which are essentially unchanged. Similar or identical features are provided with the same reference numbers in order to highlight the similarities.

The second embodiment of the invention is characterized by being provided with a latch 48 inclined radially inward in a direction opposite to a fitting direction of the ondular washer 22 in an end part 26 of the axial protrusions 24 of the ondular washer 22 so as to form a snap tab for connecting the ondular washer 22 with the sleeve 14. The fixing structure 20 of the sleeve 14 according to the second embodiment is formed as a flange with a step (not shown) in an axial sectional view. This ensures a reliable connection while enabling a simple assembly by fitting the ondular washer 22 over the sleeve 14.

## Claims

1. Angular contact bearing assembly for use in a steering column, comprising:
- at least one rolling bearing;
- a sleeve (14) for mounting the at least one rolling bearing on a shaft (10), wherein the sleeve (14) is provided with a fixing structure (20); and
- an ondular washer (22) exerting an axial preload on an axial end face (32) of the sleeve (14), wherein the ondular washer (22) is provided with one or more axial protrusions (24) engaging the fixing structure (20) of the sleeve (14);
**characterized in that**
- the fixing structure (20) of the sleeve (14) is a collar with rotational symmetry in relation to an axis (A) of the shaft (10).

2. Angular contact bearing assembly according to claim 1, wherein the at least one axial protrusion (24) of the ondular washer (22) has an end part (26) which is bent radially outward.

3. Angular contact bearing assembly for use in a steering column, comprising:
- at least one rolling bearing;
- a sleeve (14) for mounting the at least one rolling bearing on a shaft (10), wherein the sleeve (14) is provided with a fixing structure (20); and
- an ondular washer (22) exerting an axial preload on an axial end face (32) of the sleeve (14), wherein the ondular washer (22) is provided with at least one axial protrusion (24) engaging the fixing structure (20) of the sleeve (14);
**characterized in that**
- the at least one axial protrusion (24) of the ondular washer (22) has an end part (26) which is bent radially outward.

4. Angular contact bearing assembly according to claim 3, wherein the fixing structure (20) of the sleeve (14) is a collar with rotational symmetry in relation to an axis (A) of the shaft (10).

5. Angular contact bearing assembly according to at least one of the preceding claims, **characterized in that** the ondular washer (22) is provided with at least three axial protrusions (24).

6. Angular contact bearing assembly according to at least one of the preceding claims, **characterized in that** the at least one axial protrusion (24) of the ondular washer (22) has an engaging portion (28) inclined radially inward for gripping around a notch (42) of the fixing structure (20).

7. Angular contact bearing assembly according to at least one of the preceding claims, **characterized in that** a thickness of a massive shoulder portion (30) of the sleeve (14) between said axial end face (32) and a conoidal abutting surface (36) of the inner ring (12) is larger than the thickness in a portion following the conoidal abutting surface (36) in a load direction (D) of the ondular washer (22).

8. Angular contact bearing assembly according to claim 7, **characterized in that** the fixing structure (20) is provided in the massive shoulder portion (30) of the sleeve (14).

9. Angular contact bearing assembly according to at least one of the preceding claims, **characterized in that** an axial end portion of the sleeve (14) opposite to the axial end face (32) is equipped with snap-fitting protrusions (34) for gripping an axially outer edge of the outer ring (16).

10. Angular contact bearing assembly according to at least one of the preceding claims, **characterized in that** a latch (48) inclined radially inward in a direction opposite to a fitting direction (D) of the ondular washer (22) is provided in an end part (26) of the at least one axial protrusion (24) of the ondular washer (22) so as to form a snap tab for connecting the ondular washer (22) with the sleeve (14).

11. Angular contact bearing assembly according to at least one of the preceding claims, **characterized in that** the axial end face (32) of the sleeve (14) is provided with a chamfer (40) for deflecting the radial protrusions

12. Steering column for an automobile comprising an angular contact bearing assembly according to at least one of the preceding claims.
